# EUROPÄISCHE PATENTSCHRIFT

(11) **EP 4 285 787 B1**
(45) Veröffentlichungstag und Bekanntmachung des Hinweises auf die Patenterteilung: **06.08.2025**
(21) Anmeldenummer: 23202426.5
(22) Anmeldetag: 10.10.2023
(51) Int. Cl.: A47B 5/00, A47B 31/06, B60N 3/00, A47B 5/06, A47B 13/16

(54) **ANORDNUNG, INSBESONDERE ZUR NUTZUNG ALS HÄNGETISCH**
ARRANGEMENT, IN PARTICULAR FOR USE AS A HANGING TABLE
DISPOSITIF, EN PARTICULIER POUR L'UTILISATION COMME TABLE SUSPENDUE

(43) Veröffentlichungstag der Anmeldung: 06.12.2023
(73) Patentinhaber: Ducarroz, Birgit, 1782 Lossy (CH)
(72) Erfinder: Ducarroz, Birgit, 1782 Lossy (CH)
(74) Vertreter: Keller Schneider Patent- und Markenanwälte AG

(56) Entgegenhaltungen:
- DE-U1- 202021 103 875
- FR-A1- 2 491 407
- US-A- 3 585 944

## Beschreibung

### Technisches Gebiet

Die Erfindung betrifft eine Anordnung, insbesondere zur Nutzung als Hängetisch, umfassend eine Tischplatte.

### Stand der Technik

Anordnungen, welche zum eingangs genannten technischen Gebiet gehören, sind bekannt. So beschreibt beispielsweise die DE 10 2018 005 619 A1 von Christiane Beuck eine Anordnung mit einer Tischplatte, welche völlig unauffällig, ästhetisch und platzsparend in einem Raum platziert ist und in einfacher Weise mit anderen bereits vorhandenen Möbelstücken zu einem Tisch zusammengestellt bzw. kombiniert werden kann. Dazu ist an oder in der Raumdecke eines Gebäudes ein Bewegungsmechanismus mit Aufrollmechanik für Gurte oder Schnüre angeordnet, wobei die ausgerollten Gurte oder Schnüre von der Raumdecke bis auf Tischhöhe herunterreichen, wobei sich an den Gurtenden Befestigungsmittel zur lösbaren Befestigung einer Tischplatte daran befinden. Die Tischplatte kann aus einer völlig unauffälligen Position an der Raumdecke heruntergelassen werden und auf zwei rollbaren Möbelstücken wie andere kleine Tische, Beistelltische oder Regalmöbel von gleicher Höhe abgelegt werden. Dadurch ist die Tischplatte durch ihr Eigengewicht stabil und sicher gelagert, um einen Tisch zu bilden.

Solche Anordnungen haben den Nachteil, dass sie nur in einem Raum eingesetzt werden können, in welchem Raum die Raumdecke mit einem entsprechenden Bewegungsmechanismus mit Aufrollmechanik versehen ist. Zudem umfassen derartige Anordnungen zwei rollbare Möbelstücke, auf welchen die Tischplatte auf gleicher Höhe abgelegt werden kann. Dies führt dazu, dass derartige Anordnungen nur unflexibel eingesetzt werden können und zudem sehr viel Platz beanspruchen.

Weiter beschreibt die FR 2 491 407 A1 der Société Anonyme des Usines Chausson einen Tisch zur Verwendung in Strassenfahrzeugen. Die Ausführung des Tisches bewirkt, dass er vollständig einklapbar ist, ohne dass lästige Demontagearbeiten durchgeführt werden müssen und ohne dass der Tisch an einen Aufbewahrungsort gebracht werden muss. Der Tisch weist zwei Lenkstangen auf, die gelenkig mit dem Fahrzeugdach verbunden sind und an denen ein Ende einer Platte aufgehängt ist. Die Platte wird in der Nähe ihres anderen Endes von mindestens einem Fuss gestützt, der sich auf dem Boden des Fahrzeugs abstützt. Weiter offenbart die CN219214688U eine Anordnung zur Verwendung als Tisch an einer Heckklappe eines Kraftfahrzeuges.

Im vorliegenden Text werden Begriffe wie "oben", "vertikal", "unten", "unterhalb" und "horizontal" verwendet. Diese Begriffe beziehen sich auf die Nutzung der erfindungsgemässen Anordnung als Hängetisch, wo die Tischplatte irgendwo aufgehängt ist. D.h., in diesem Zustand hängt die Tischplatte aufgrund der Schwerkraft an einem Hängemittel. Dabei ist die Schwerkraft von "oben" nach "unten" zeigend "vertikal" ausgerichtet, während "horizontal" in einer Ebene liegend bedeutet, welche Ebene senkrecht zur Schwerkraft ausgerichtet ist.

### Darstellung der Erfindung

Aufgabe der Erfindung ist es, eine dem eingangs genannten technischen Gebiet zugehörende Anordnung, insbesondere zur Nutzung als Hängetisch, zu schaffen, welche flexibel an verschiedenen Orten eingesetzt werden kann und nur wenig Platz beansprucht. Die Lösung der Aufgabe ist durch die Merkmale des Anspruchs 1 definiert. Gemäss der Erfindung dient die Anordnung zur Nutzung als an einer Heckklappe eines Kraftfahrzeugs, wie beispielsweise eines Wohnmotorwagens, aufgehängter Hängetisch. Dabei umfasst die Anordnung eine Tischplatte und eine an der Tischplatte anbringbare oder an der Tischplatte angebrachte Hängevorrichtung mit wenigstens einem Hängemittel zum Aufhängen der Tischplatte an der geöffneten Heckklappe des Kraftfahrzeugs, insbesondere des Wohnmotorwagens. Weiter umfasst die Anordnung eine Stützstange zum Unterstützen der geöffneten Heckklappe des Kraftfahrzeugs. Zudem weist die Tischplatte in ihrer Hauptfläche eine Stützstangendurchführöffnung zum Durchführen der Stützstange durch die Stützstangendurchführöffnung und damit durch die Tischplatte auf.

Vorzugsweise ist ein Wohnmotorwagen ein Kraftfahrzeug, bei welchem mindestens drei Viertel des zur Verfügung stehenden Volumens inklusive des Führer- und Gepäckraums als Wohnraum und zum Personentransport eingerichtet ist. Zugänge zum Wohnraum, die beispielsweise durch Vorräume führen, und weitere Lademöglichkeiten, wie zum Beispiel Sattelkammern und Werkzeugschränke, die mit dem eigentlichen Wohnen und Reisen nicht im Zusammenhang stehen, gehören dabei vorzugsweise zum Sachentransportvolumen und gelten entsprechend nicht als Wohnraum oder zum Personentransport eingerichtet. Vorzugsweise beinhaltet ein Wohnmotorwagen eine Schlafgelegenheit, die unter Umständen auch als Sitz oder Sitze dienen kann, und eine Einrichtung zur Unterbringung von Gepäck und sonstigen Gegenständen. Weiter umfasst ein Wohnmotorwagen vorzugsweise einen Tisch und eine Sitzgelegenheit. Dabei kann der Tisch beispielsweise leicht demontierbar sein. Der Tisch kann daher durch eine erfindungsgemässe Anordnung zur Nutzung als Hängetisch gebildet sein. Wenn die Anordnung zur Nutzung als Hängetisch an der Heckklappe des Kraftfahrzeugs bzw. Wohnmotorwagens angebracht ist, sodass sie bei geöffneter Heckklappe des Kraftfahrzeugs bzw. Wohnmotorwagens einen Hängetisch bildet, so kann die Sitzgelegenheit beispielsweise durch die Fläche des Heckladeraums des Kraftfahrzeugs bzw. Wohnmotorwagens gebildet sein. In einer besonders bevorzugten Variante umfasst ein Wohnmotorwagen zudem eine Kochmöglichkeit. Diese Kochmöglichkeit kann fest im Wohnmotorwagen montiert sein. Sie kann jedoch auch mobil sein und beispielsweise durch einen Campingkocher gebildet sein, welcher auf dem oder im Hängetisch angeordnet ist.

Erfindungsgemäss umfasst die Anordnung die an der Tischplatte anbringbare oder an der Tischplatte angebrachte Hängevorrichtung mit dem wenigstens einem Hängemittel zum Aufhängen der Tischplatte an der geöffneten Heckklappe des Kraftfahrzeugs, insbesondere des Wohnmotorwagens. Dieses wenigstens eine Hängemittel ist durch eine Schnur, ein Seil, ein Band, ein Draht oder eine I<ette gebildet.

Die erfindungsgemässe Lösung hat den Vorteil, dass die Anordnung nur wenig Platz beansprucht. Indem die Tischplatte mit dem wenigstens einen Hängemittel an der geöffneten Heckklappe des Kraftfahrzeugs, insbesondere des Wohnmotorwagens, aufgehängt werden kann, kann die Anordnung am jeweiligen Standort des Kraftfahrzeugs als Hängetisch genutzt werden. Damit kann die Anordnung sehr flexibel an verschiedenen Orten eingesetzt werden. So kann ein beliebiges Kraftfahrzeug, welches eine Heckklappe aufweist, mit der erfindungsgemässen Anordnung ausgerüstet werden, um im I<raftfahrzeug jeweils einen einfach und schnell zu montierenden Tisch dabei zu haben. Insbesondere für Camper, d.h. Personen, die Reisen und/oder Freizeitaufenthalte als Camping gestalten, ist dies äusserst praktisch. Genauso praktisch ist dies aber auch für Personen, welche aus beruflichen oder privaten Gründen mit ihrem Kraftfahrzeug an einen gewünschten Ort fahren können müssen oder wollen, und dort vor Ort eine Arbeitsfläche zum Durchführen von Arbeiten auf Tischhöhe wünschen, um vor Ort ergonomische Arbeitsverhältnisse zu haben.

Vorzugsweise ist die Hängevorrichtung längenverstellbar. Vorteilhafterweise weist die Hängevorrichtung eine Längenverstellvorrichtung auf, um eine freie Länge des wenigstens einen Hängemittels einzustellen, um eine Höhe der Tischplatte über dem Boden einzustellen, in welcher die Tischplatte über dem Boden hängt, wenn die Tischplatte mit der Hängevorrichtung an der geöffneten Heckklappe des Kraftfahrzeugs aufgehängt ist. Dies hat den Vorteil, dass die Anordnung einfacher den individuellen Bedürfnissen des Benutzers der Anordnung angepasst werden kann.

Alternativ dazu besteht aber auch die Möglichkeit, dass die Hängevorrichtung keine solche Längenverstellvorrichtung aufweist. eine solche Alternative hat den Vorteil, dass die Hängevorrichtung einfacher und damit kostengünstiger hergestellt werden kann.

Die Anordnung umfasst eine Stützstange zum Unterstützen der geöffneten Heckklappe des I<raftfahrzeugs, insbesondere durch einklemmen der Stützstange zwischen Boden und geöffnete Heckklappe, wobei die Tischplatte in ihrer Hauptfläche eine Stützstangendurchführöffnung zum Durchführen der Stützstange durch die Stützstangendurchführöffnung und damit durch die Tischplatte aufweist.

Dies hat den Vorteil, dass durch die Stützstange ein unbeabsichtigtes Schliessen der Heckklappe des Kraftfahrzeugs verhindert werden kann, wenn die geöffnete Heckklappe durch die Stützstange unterstützt ist. Dies ermöglicht bei der Nutzung der Anordnung als Hängetisch, auch schwerere Lasten auf der Tischplatte abzustellen, ohne dass sich aufgrund des Gewichts die Heckklappe des Kraftfahrzeugs unbeabsichtigt schliessen kann. Wenn durch die Stützstange die geöffnete Heckklappe unterstützt ist und die Stützstange zugleich durch die Stützstangendurchführöffnung geführt ist, wenn die Tischplatte an der geöffneten Heckklappe des Kraftfahrzeugs aufgehängt ist, werden durch die Stützstange zugleich unbeabsichtigte horizontale Translationsbewegungen der Tischplatte minimiert oder ganz verhindert. Dies führt dazu, dass die Nutzung des Hängetischs für den Benutzer angenehmer wird.

Vorzugsweise weist die Stützstange eine Länge im Bereich von 1.6 m bis 2.3 m auf. Dies hat den Vorteil, dass die Stützstange besonders gut für die Nutzung der Anordnung in etwas grösseren Kraftfahrzeugen wie beispielsweise Wohnmotorwagen geeignet ist.

Alternativ dazu besteht aber auch die Möglichkeit, dass die Stützstange 1.6 m oder kürzer oder 2.3 m oder länger ist.

Vorteilhafterweise weist die Stützstange einen Querschnitt auf, mit welchem Querschnitt die Stützstange durch die Stützstangendurchführöffnung passt, wobei die Stützstangendurchführöffnung eine Stützstangendurchführöffnungsfläche aufweist, welche Stützstangendurchführöffnungsfläche höchstens 110%, bevorzugt höchstens 107%, ganz besonders bevorzug höchstens 105%, einer Fläche des Querschnitts der Stützstange beträgt. Bevorzugt verläuft der Querschnitt der Stützstange senkrecht zur Längsachse der Stützstange ausgerichtet durch die Stützstange.

Ein Querschnitt der Stützstange mit dieser Fläche hat den Vorteil, dass, wenn durch die Stützstange die geöffnete Heckklappe des Kraftfahrzeugs unterstützt ist und die Stützstange zugleich durch die Stützstangendurchführöffnung geführt ist sowie die Tischplatte an der geöffneten Heckklappe des Kraftfahrzeugs aufgehängt ist, unbeabsichtigte horizontale Translationsbewegungen der Tischplatte auf ein Minimum reduziert oder sogar ganz verhindert werden.

Alternativ dazu besteht aber auch die Möglichkeit, dass der Querschnitt der Stützstange so bemessen ist, dass die Stützstange zwar durch die Stützstangendurchführöffnung passt, aber dass die Stützstangendurchführöffnungsquerschnittfläche mehr als 110% der Fläche des Querschnitts der Stützstange beträgt. Auch besteht die Möglichkeit, dass die Fläche des Querschnitts der Stützstange kleiner als die Stützstangendurchführöffnungquerschnittsfläche ist und entsprechend nicht durch die Stützstangendurchführöffnung passt.

Vorzugsweise ist der Querschnitt der Stützstange kreisförmig. Weiter ist die Stützstangendurchführöffnung vorzugsweise kreisförmig. Eines von beidem sowie auch beides zusammen hat den Vorteil, dass, wenn durch die Stützstange die geöffnete Heckklappe des Kraftfahrzeugs unterstützt ist und die Stützstange zugleich durch die Stützstangendurchführöffnung geführt ist sowie die Tischplatte an der geöffneten Heckklappe des Kraftfahrzeugs aufgehängt ist, bei einem Drehen der Tischplatte um eine vertikal ausgerichtete Achse nicht die Stützstange verrutscht wird. Dadurch wird erreicht, dass die Stützstange zuverlässiger dafür genutzt werden kann, die Heckklappe des I<raftfahrzeugs zu unterstützen.

Alternativ dazu besteht aber auch die Möglichkeit, dass weder der Querschnitt der Stützstange noch die Stützstangendurchführöffnung kreisförmig ist.

Vorzugsweise ist die Stützstangendurchführöffnung im Wesentlichen in einer Mitte der Tischplatte angeordnet. In einer weiteren bevorzugten Variante hingegen ist die Stützstangendurchführöffnung in einem Randbereich der Tischplatte angeordnet.

In einer vorteilhaften Variante umfasst die Anordnung auch zwei solche Stützstangen und weist die Tischplatte zwei Stützstangendurchführöffnungen zum Durchführen jeweils einer der zwei Stützstangen auf. Besonderes bevorzugt sind die zwei Stützstangendurchführöffnungen je in einem anderen Eckenbereich der Tischplatte angeordnet. Die zwei Stützstangendurchführöffnungen können aber auch anders in der Tischplatte angeordnet sein. Eine Anordnung mit zwei Stützstangen, wobei die Tischplatte zwei Stützstangendurchführöffnungen aufweist, hat den Vorteil, dass, wenn durch die zwei Stützstangen die geöffnete Heckklappe des Kraftfahrzeugs unterstützt ist und die zwei Stützstangen je durch eine der zwei Stützstangendurchführöffnung geführt sind sowie die Tischplatte an der geöffneten Heckklappe des Kraftfahrzeugs aufgehängt ist, sowohl unbeabsichtigte horizontale Translationsbewegungen der Tischplatte als auch Drehbewegungen der Tischplatte um eine vertikale Drehachse auf ein Minimum reduziert oder sogar ganz verhindert werden.

Unabhängig von der Anzahl Stützstangen ist die Stützstange vorteilhafterweise eine Teleskopstange. Dies hat den Vorteil, dass die Länge der Stützstange auf einfache Art und Weise an die Höhe der geöffneten Heckklappe des Kraftfahrzeugs über dem Boden angepasst werden kann. Dadurch kann die Anordnung beispielsweise für verschiedene Typen von Kraftfahrzeugen verwendet werden. Zudem wird dadurch die Verwendung der Anordnung auf unebenem Boden, wie er beispielsweise auf freiem Feld oder auf Campingplätzen vorkommt, ermöglicht, da dort der Abstand zwischen der geöffneten Heckklappe des Kraftfahrzeugs und dem Boden je nach Boden variieren kann.

Alternativ dazu besteht aber auch die Möglichkeit, dass die Stützstange keine Teleskopstange ist. So kann die Stützstange beispielsweise eine fixe Länge aufweisen. Auch kann die Länge der Stützstange durch aufsteckbare oder aufschraubbare Zusatzelemente einstellbar sein. In diesem Fall weist die Stützstange mehr als ein Element auf.

Vorzugsweise weist die Anordnung ein an der Stützstange anbringbares oder an der Stützstange angebrachtes Tragelement auf, welches Tragelement in einem an der Stützstange angebrachten Zustand grösser als die Stützstangendurchführöffnung ist, damit die Tischplatte auf dem an der Stützstange angebrachten Tragelement aufliegen kann, wenn die Stützstange in die Stützstangendurchführöffnung eingeführt ist und zum Unterstützen der geöffneten Heckklappe des Kraftfahrzeugs zwischen dem Boden und der Heckklappe eingeklemmt ist, insbesondere wenn die Tischplatte zugleich mit der Hängevorrichtung an der geöffneten Heckklappe des Kraftfahrzeugs aufgehängt ist. Dies hat den Vorteil, dass der Hängetisch eine grössere Stabilität aufweist, womit die Nutzung des Hängetischs angenehmer wird.

In einer Variante dazu besteht aber auch die Möglichkeit, dass die Anordnung kein derartiges an der Stützstange anbringbares oder an der Stützstange angebrachtes Tragelement aufweist.

Die nachfolgend erwähnten Varianten mit Stützbein und/oder Klappbein werden mit Stützstange umgesetzt.

Vorteilhafterweise weist die Anordnung wenigstens ein an der Tischplatte anbringbares oder an der Tischplatte angebrachtes Stützbein auf, welches wenigstens eine Stützbein in einem an der Tischplatte angebrachten Zustand eine Stützstellung aufweist, wobei, wenn die Tischplatte mit der Hängevorrichtung an der geöffneten Heckklappe des Kraftfahrzeugs aufgehängt ist und sich das wenigstens eine Stützbein in der Stützstellung befindet, das wenigstens eine Stützbein auf dem Boden abstützbar ist. Dies hat den Vorteil, dass der Hängetisch im Betrieb eine grössere Stabilität aufweist, womit die Nutzung des Hängetischs angenehmer wird.

Alternativ dazu besteht aber auch die Möglichkeit, dass die Anordnung kein derartiges Stützbein aufweist.

Vorteilhafterweise weist die Anordnung wenigstens ein an der Tischplatte angeordnetes Klappbein auf, welches wenigstens eine Klappbein von einer im Wesentlichen an die Tischplatte anliegenden Einklappstellung in eine im Wesentlichen von der Tischplatte abstehenden Ausklappstellung und zurück verstellbar ist. Dies hat den Vorteil, dass die Tischanordnung sehr platzsparend verstaubar ist, wobei das wenigstens eine 1<lappbein nicht einfach verloren gehen kann, da es an der Tischplatte angeordnet verbleibt. In einer Variante ist das Klappbein teleskopisch ausgebildet. In einer anderen Variante hingegen ist das Klappbein nicht teleskopisch ausgebildet.

Wenn die Tischplatte mit der Hängevorrichtung an der geöffneten Heckklappe des I<raftfahrzeugs aufgehängt ist und sich das wenigstens eine Klappbein in der Ausklappstellung befindet, so ist das wenigstens eine 1<lappbein vorzugsweise auf dem Boden abstützbar. In diesem Fall bildet das 1<lappbein das vorgenannte, an der Tischplatte angebrachte wenigstens eine Stützbein. Somit weist das wenigstens eine Klappbein mit seiner Ausklappstellung eine Stützstellung auf, wenn es an der Tischplatte angebracht ist. In dieser Ausführungsform hat das wenigstens eine Klappbein entsprechend ebenfalls den Vorteil, dass der Hängetisch im Betrieb eine grössere Stabilität aufweist, womit die Nutzung des Hängetischs angenehmer wird.

Alternativ dazu besteht aber auch die Möglichkeit, dass die Anordnung kein derartiges Klappbein aufweist.

Bevorzugt weist die Hängevorrichtung eine Einzugsvorrichtung zum Einziehen des wenigstens einen Hängemittels auf, um beim Verstauen des Hängetischs bei Nichtgebrauch des Hängetischs das wenigstens eine Hängemittel einzuziehen und dadurch zu verstauen. Diese Einzugsvorrichtung kann beispielsweise in oder an der Tischplatte oder aber an einem von der Tischplatte abgewandten Ende der Hängevorrichtung angeordnet sein. Im an der Heckklappe des Kraftfahrzeugs angebrachten Zustand kann die Einzugsvorrichtung somit auch an oder in der Heckklappe angebracht sein. Unabhängig davon hat die Einzugsvorrichtung den Vorteil, dass die Benutzung der Anordnung erleichtert wird, weil im eingezogenen Zustand der Hängemittel die Hängemittel nicht lose herumliegen oder herumhängen, wenn die Tischplatte nicht an der Hängevorrichtung aufgehängt ist. Dadurch wird sowohl der Transport der Anordnung für sich separat als auch die Nutzung der Anordnung in einem mit der Hängevorrichtung an der Heckklappe des I<raftfahrzeugs angebrachten Zustand erleichtert. D.h., die Anordnung kann mit der Hängevorrichtung an der Heckklappe des Kraftfahrzeugs angebracht bleiben, auch wenn die Anordnung zwischenzeitlich nicht als Hängetisch genutzt wird und die Heckklappe des I<raftfahrzeugs geschlossen ist. Dabei kann die Tischplatte beispielsweise im Wesentlichen parallel zur Heckklappe des Kraftfahrzeugs ausgerichtet an die Heckklappe des I<raftfahrzeugs anliegend verstaut werden. In einer solchen verstauten Stellung baumelt das wenigstens eine Hängemittel der Hängevorrichtung nicht lose herum, wenn das wenigstens eine Hängemittel in der Einzugsvorrichtung eingezogen ist.

Alternativ dazu besteht aber auch die Möglichkeit, dass die Hängevorrichtung keine derartige Einzugsvorrichtung aufweist. Eine solche Alternative ermöglicht es, die Anordnung einfacher und damit kostengünstiger herzustellen.

Bevorzugt weist die Tischplatte wenigstens einen Magnet, besonders bevorzugt wenigstens zwei Magnete, ganz besonders bevorzugt wenigstens drei Magnete, auf, um die Tischplatte an einem magnetischen Bereich der Heckklappe des Kraftfahrzeugs zu halten, wenn die Tischplatte mit dem wenigstens einen Magneten bzw. den wenigstens zwei Magneten bzw. den wenigstens drei Magneten in die Nähe eines magnetischen Bereichs der Heckklappe gebracht wird. Dies hat den Vorteil, dass die Tischplatte besonders einfach verstaut werden kann. Beispielsweise kann die Tischplatte im Wesentlichen parallel zur Heckklappe des Kraftfahrzeugs ausgerichtet an die Heckklappe des I<raftfahrzeugs anliegend verstaut und durch den wenigstens einen bzw. die wenigstens zwei bzw. die wenigstens drei Magnete an ihrer Position relativ zur Heckklappe gehalten werden.

Bevorzugt ist jeder des wenigstens einen bzw. der wenigstens zwei bzw. der wenigstens drei Magnete in einen Bereich eines Randes, insbesondere einer Ecke, der Tischplatte angeordnet. Dies hat den Vorteil, dass die Tischplatte durch den wenigstens einen bzw. die wenigstens zwei bzw. die wenigstens drei Magnete besonders zuverlässig an ihrer Position relativ zur Heckklappe gehalten werden kann.

In einer Variante dazu ist einer oder sind mehrere des wenigstens einen bzw. der wenigstens zwei bzw. der wenigstens drei Magnete nicht im Bereich des Randes der Tischplatte angeordnet.

Alternativ zu diesen Variante besteht auch die Möglichkeit, dass die Tischplatte keinen Magneten aufweist. In einer derartigen Alternative weist die Tischplatte anstelle der Magnete wenigstens eine Klemmvorrichtung, besonders bevorzugt wenigstens zwei Klemmvorrichtungen, ganz besonders bevorzugt wenigstens drei Klemmvorrichtungen, auf, um die Tischplatte an einem Überstand an der Heckklappe des Kraftfahrzeugs festzuklemmen. Die Tischplatte kann aber auch ohne derartige Klemmvorrichtung ausgebildet sein.

Vorteilhafterweise ist in der Tischplatte wenigstens ein Schlitz zum Halten eines Besteckelements, wie beispielsweise eines Messers, insbesondere eines Besteckmessers oder eines I<üchenmessers, oder einer Gabel, angeordnet. Dies hat den Vorteil, dass die Anordnung insbesondere beim Campen ein einfaches Verstauen von Besteckelementen ermöglicht. Hierzu ist jeder des wenigstens einen Schlitzes vorteilhafterweise von einer ersten Hauptfläche der Tischplatte zu einer der ersten Hauptfläche der Tischplatte gegenüberliegenden, zweiten Hauptfläche der Tischplatte durchgehend durch die Tischplatte. Vorteilhafterweise weist dabei jeder Schlitz eine Länge von 2 cm bis 4 cm und eine Breite von 2 mm bis 5 mm auf. Selbstverständlich kann der wenigstens eine Schlitz aber auch andere Masse aufweisen.

Alternativ dazu besteht aber auch die Möglichkeit, dass in der Tischplatte kein solcher Schlitz zum Halten eines Besteckelements angeordnet ist.

Besonders bevorzugt wird ein Kraftfahrzeug, insbesondere ein Wohnmotorwagen, mit einer erfindungsgemässen Anordnung ausgerüstet. Entsprechend weist ein Kraftfahrzeug, insbesondere Wohnmotorwagen, vorteilhafterweise eine erfindungsgemässe Anordnung auf. Selbstverständlich kann eine erfindungsgemässe Anordnung aber auch ohne ein I<raftfahrzeug hergestellt und verkauft werden. Beispielsweise kann die erfindungsgemässe Anordnung zum Nachrüsten eines Wohnmotorwagens hergestellt und vertrieben werden.

Ein mit der erfindungsgemässen Anordnung ausgerüstetes Kraftfahrzeug weist vorzugsweise eine Heckklappe auf, welche Heckklappe zum Öffnen der Heckklappe nach oben schwenkbar am restlichen Kraftfahrzeug angebracht ist, wobei die Tischplatte mit der Hängevorrichtung an der Heckklappe anbringbar ist, damit die Tischplatte bei geöffneter Heckklappe durch die Hängevorrichtung an der Heckklappe aufhängbar oder aufgehängt ist.

Wenn die Anordnung die Stützstange zum Unterstützen der geöffneten Heckklappe des I<raftfahrzeugs umfasst und die Tischplatte in ihrer Hauptfläche eine Stützstangendurchführöffnung zum Durchführen der Stützstange durch die Stützstangendurchführöffnung und damit durch die Tischplatte aufweist, dann weist die Stützstange vorzugsweise eine Länge auf oder, wenn die Stützstange eine Teleskopstange ist, ist die Stützstange vorzugsweise in eine Länge bringbar, mit welcher Länge die Stützstange bei geöffneter Heckklappe im Wesentlichen vertikal ausgerichtet zwischen dem Boden und die geöffnete Heckklappe einklemmbar ist, um die geöffnete Heckklappe zu unterstützen. Dies hat den Vorteil, dass durch die Stützstange die Heckklappe des Kraftfahrzeugs optimal unterstützt werden kann. Damit kann durch die Stützstange ein unbeabsichtigtes Schliessen der Heckklappe des Kraftfahrzeugs besonders effektiv verhindert werden, wenn die geöffnete Heckklappe durch die Stützstange unterstützt ist.

Vorzugsweise ist die Stützstange im Wesentlichen vertikal ausgerichtet und durch die Stützstangendurchführöffnung in der Tischplatte geführt zwischen dem Boden und der geöffneten Heckklappe einklemmbar, während die Tischplatte durch die Hängevorrichtung an der Heckklappe aufgehängt ist. Wenn die geöffnete Heckklappe derartig durch die Stützstange unterstützt ist und die Stützstange zugleich durch die Stützstangendurchführöffnung geführt ist, wenn die Tischplatte an der geöffneten Heckklappe des I<raftfahrzeugs aufgehängt ist, werden durch die Stützstange zugleich unbeabsichtigte horizontale Translationsbewegungen der Tischplatte minimiert oder ganz verhindert.

Wenn die Anordnung zwei Stützstangen zum Unterstützen der geöffneten Heckklappe des I<raftfahrzeugs umfasst und die Tischplatte in ihrer Hauptfläche zwei Stützstangendurchführöffnungen zum Durchführen jeweils einer der zwei Stützstange durch die jeweilige Stützstangendurchführöffnung und damit durch die Tischplatte aufweist, dann weisen die zwei Stützstangen vorzugsweise je eine Länge auf oder, wenn die zwei Stützstangen Teleskopstangen sind, sind die zwei Stützstangen vorzugsweise je in eine Länge bringbar, mit welcher Länge jede der zwei Stützstangen bei geöffneter Heckklappe im Wesentlichen vertikal ausgerichtet zwischen dem Boden und die geöffnete Heckklappe einklemmbar ist, um die geöffnete Heckklappe zu unterstützen.

Vorzugsweise sind die zwei Stützstangen je im Wesentlichen vertikal ausgerichtet und durch die jeweilige Stützstangendurchführöffnung in der Tischplatte geführt zwischen dem Boden und der geöffneten Heckklappe einklemmbar, während die Tischplatte durch die Hängevorrichtung an der Heckklappe aufgehängt ist. Wenn die geöffnete Heckklappe derartig durch die zwei Stützstangen unterstützt ist und die zwei Stützstange zugleich je durch eine andere der zwei Stützstangendurchführöffnungen geführt sind, wenn die Tischplatte an der geöffneten Heckklappe des Kraftfahrzeugs aufgehängt ist, werden durch die zwei Stützstangen zugleich sowohl unbeabsichtigte horizontale Translationsbewegungen der Tischplatte als auch Drehbewegungen der Tischplatte um eine vertikale Drehachse auf ein Minimum reduziert oder sogar ganz verhindert.

Wenn die Anordnung das an der Stützstange anbringbare oder an der Stützstange angebrachte Tragelement aufweist, welches Tragelement im an der Stützstange angebrachten Zustand grösser als die Stützstangendurchführöffnung ist, damit die Tischplatte auf dem an der Stützstange angebrachten Tragelement aufliegen kann, wenn die Stützstange in die Stützstangendurchführöffnung eingeführt ist und zum Unterstützen der geöffneten Heckklappe des Kraftfahrzeugs zwischen dem Boden und der Heckklappe eingeklemmt ist, insbesondere wenn die Tischplatte zugleich mit der Hängevorrichtung an der geöffneten Heckklappe des Kraftfahrzeugs aufgehängt ist, dann ist die Stützstange vorteilhafterweise im Wesentlichen vertikal ausgerichtet und durch die Stützstangendurchführöffnung in der Tischplatte geführt zwischen dem Boden und die geöffnete Heckklappe einklemmbar, während die Tischplatte durch die Hängevorrichtung an der Heckklappe aufgehängt ist und zugleich auf dem an der Stützstange angebrachten Tragelement aufliegt. Entsprechend ist das Tragelement vorzugsweise derart an der Stützstange positioniert an der Stützstange anbringbar oder an der Stützstange angebracht, dass die Stützstange, wenn die Tischplatte zugleich mit der Hängevorrichtung an der geöffneten Heckklappe des Kraftfahrzeugs aufgehängt ist, im Wesentlichen vertikal ausgerichtet und durch die Stützstangendurchführöffnung in der Tischplatte geführt zwischen dem Boden und die geöffnete Heckklappe eingeklemmt ist, während die Tischplatte an der Hängevorrichtung an der Heckklappe hängt und zugleich auf dem an der Stützstange angebrachten Tragelement aufliegt, wenn das Tragelement an der Stützstange angebracht ist.

Wenn die Anordnung das vorgehend erwähnte, wenigstens eine an der Tischplatte angeordnete Klappbein aufweist, welches wenigstens eine Klappbein von der im Wesentlichen an die Tischplatte anliegenden Einklappstellung in die im Wesentlichen von der Tischplatte abstehenden Ausklappstellung und zurück verstellbar ist, dann ist die Tischplatte vorteilhafterweise durch die Hängevorrichtung an der geöffneten Heckklappe aufhängbar und zugleich mit dem in die Ausklappstellung verstellten wenigstens einen Klappbein auf dem Boden abstützbar. Entsprechend weisen vorteilhafterweise das wenigstens eine Hängemittel eine freie Länge und das wenigstens eine Klappbein je eine Länge auf, sodass, wenn die Tischplatte mit der Hängevorrichtung an der geöffneten Heckklappe des Kraftfahrzeugs aufgehängt ist und sich das wenigstens eine Klappbein in der Ausklappstellung befindet, die Tischplatte an der Hängevorrichtung an der geöffneten Heckklappe des Kraftfahrzeugs hängt und zugleich mit dem wenigstens einen Klappbein auf dem Boden abgestützt ist. D.h., vorteilhafterweise ist die Länge des 1<lappbeins so bemessen, dass, wenn die Tischplatte mit der Hängevorrichtung an der geöffneten Heckklappe des Kraftfahrzeugs aufgehängt ist und sich das Klappbein in der Ausklappstellung befindet, das Klappbein auf dem Boden abstützbar ist.

Vorteilhafterweise ist das wenigstens eine Hängemittel an mindestens zwei Punkten, bevorzugt mindestens drei Punkten, besonders bevorzugt mindestens vier Punkten, an der Heckklappe angebracht, wodurch die Tischplatte bei geöffneter Heckklappe durch die Hängevorrichtung an den mindestens zwei bzw. mindestens drei bzw. mindestens vier Punkten an der geöffneten Heckklappe aufhängbar oder aufgehängt ist. Dies hat den Vorteil, dass die Tischplatte durch die Hängevorrichtung auf einfache Weise zuverlässig reproduzierbar in einer gleichen Drehstellung um eine vertikale Achse relativ zum I<raftfahrzeug an der geöffneten Heckklappe aufgehängt werden kann. Wenn die Tischplatte beispielsweise den vorgehend erwähnten wenigstens einen, die wenigstens zwei oder die wenigstens drei Magnete aufweist, um die Tischplatte an einem magnetischen Bereich der Heckklappe des Kraftfahrzeugs zu halten, und wenn die Tischplatte mit dem wenigstens einen Magneten in die Nähe eines magnetischen Bereichs der Heckklappe auf einer Seite der Heckklappe gebracht ist, welche Seite der Heckklappe im geschlossenen Zustand der Heckklappe dem Innern des Kraftfahrzeugs zugewandt ist, sodass sich die Tischplatte bei geöffneter Heckklappe unterhalb der Heckklappe befindet, so kann die Tischplatte beispielsweise auch bei geöffneter Heckklappe durch die Magnete an der Heckklappe gehalten sein und damit auch bei geöffneter Heckklappe zwar mit der Hängevorrichtung an der Hängevorrichtung an der Heckklappe angebracht sein, aber nicht durch die Hängevorrichtung an der geöffneten Heckklappe aufgehängt sein, sondern nur an der geöffneten Heckklappe aufhängbar sein. In diesem Beispiel kann die Tischplatte, wenn die Tischplatte manuell entgegen der Anziehung der Magnete von der geöffneten Heckklappe gelöst und von der geöffneten Heckklappe entfernt wird, bei geöffneter Heckklappe in eine Position gebracht werden, in welcher die Tischplatte durch die Hängevorrichtung an den mindestens zwei bzw. mindestens drei bzw. mindestens vier Punkten an der geöffneten Heckklappe aufgehängt ist. Wenn die Tischplatte hingegen beispielsweise die vorgehend erwähnte wenigstens eine Klemmvorrichtung, wenigstens zwei Klemmvorrichtungen oder wenigstens drei Klemmvorrichtungen aufweist, um die Tischplatte an einem Überstand an der Heckklappe des Kraftfahrzeugs festzuklemmen, und wenn die Tischplatte mit der wenigstens einen Klemmvorrichtungan einem Überstand an der Seite der Heckklappe festgeklemmt ist, welche Seite der Heckklappe im geschlossenen Zustand der Heckklappe dem Innern des Kraftfahrzeugs zugewandt ist, sodass sich die Tischplatte bei geöffneter Heckklappe unterhalb der Heckklappe befindet, so kann die Tischplatte beispielsweise auch bei geöffneter Heckklappe durch die Klemmvorrichtungan der Heckklappe gehalten sein und damit auch bei geöffneter Heckklappe zwar mit der Hängevorrichtung an der Hängevorrichtung an der Heckklappe angebracht sein, aber nicht durch die Hängevorrichtung an der geöffneten Heckklappe aufgehängt sein, sondern nur an der geöffneten Heckklappe aufhängbar sein. In diesem Beispiel kann die Tischplatte, wenn die Tischplatte manuell von der geöffneten Heckklappe gelöst und von der geöffneten Heckklappe entfernt wird, bei geöffneter Heckklappe in eine Position gebracht werden, in welcher die Tischplatte durch die Hängevorrichtung an den mindestens zwei bzw. mindestens drei bzw. mindestens vier Punkten an der geöffneten Heckklappe aufgehängt ist.

Alternativ dazu besteht aber auch die Möglichkeit, dass das wenigstens eine Hängemittel nur an einem Punkt an der Heckklappe angebracht ist, wodurch die Tischplatte bei geöffneter Heckklappe durch die Hängevorrichtung an einen Punkt an der geöffneten Heckklappe aufhängbar oder aufgehängt ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine vereinfachte schematische Darstellung einer Seitenansicht eines Hecks eines Wohnmotorwagens und damit eines Kraftfahrzeugs mit einer erfindungsgemässen Anordnung zur Nutzung als an einer Heckklappe des Kraftfahrzeugs aufgehängten Hängetisch,
- Fig. 2: eine vereinfachte schematische Darstellung einer Ansicht des Kraftfahrzeugs mit der geöffneten Heckklappe und mit der erfindungsgemässen Anordnung von hinten oben,
- Fig. 3: eine vereinfachte schematische Darstellung eines Ausschnitts einer Ansicht des Kraftfahrzeugs mit der geöffneten Heckklappe und mit der erfindungsgemässen Anordnung von hinten unten,
- Fig. 4: eine vereinfachte schematische Darstellung eines Abschnitts der Stützstange mit dem daran angebrachten Tragelement,
- Fig. 5: eine vereinfachte schematische Darstellung einer Seitenansicht des Hecks des Kraftfahrzeugs mit einer nicht erfindungsgemässen Anordnung zur Nutzung als an einer Heckklappe des Kraftfahrzeugs aufgehängten Hängetisch,
- Fig. 6: eine vereinfachte schematische Darstellung einer Ansicht des Kraftfahrzeugs mit der geöffneten Heckklappe und mit der nicht erfindungsgemässen Anordnung von hinten oben,
- Fig. 7: eine vereinfachte schematische Darstellung eines Ausschnitts einer Ansicht des Kraftfahrzeugs mit der geöffneten Heckklappe und mit der nichterfindungsgemässen Anordnung von hinten unten,
- Fig. 8: eine vereinfachte schematische Ansicht eines Abschnitts einer Tischplatte der in den Figuren 1 bis 4 gezeigten erfindungsgemässen Anordnung,
- Fig. 9: eine vereinfachte schematische Darstellung der in den Figuren 1 bis 4 dargestellten erfindungsgemässen Anordnung 1, wobei die Anordnung separat vom Kraftfahrzeug dargestellt ist,
- Fig. 10: eine vereinfachte schematische Darstellung der in den Figuren 5, 6 und 7 dargestellten nicht erfindungsgemässen Anordnung, wobei die Anordnung 21 separat vom Kraftfahrzeug dargestellt ist, und
- Fig. 11a, b: schematisch vereinfachte Darstellungen einer nicht erfindungsgemässen Anordnung zur Nutzung als an der Heckklappe des Kraftfahrzeugs aufgehängten Hängetisch.

Grundsätzlich sind in den Figuren gleiche Teile mit gleichen Bezugszeichen versehen.

### Wege zur Ausführung der Erfindung

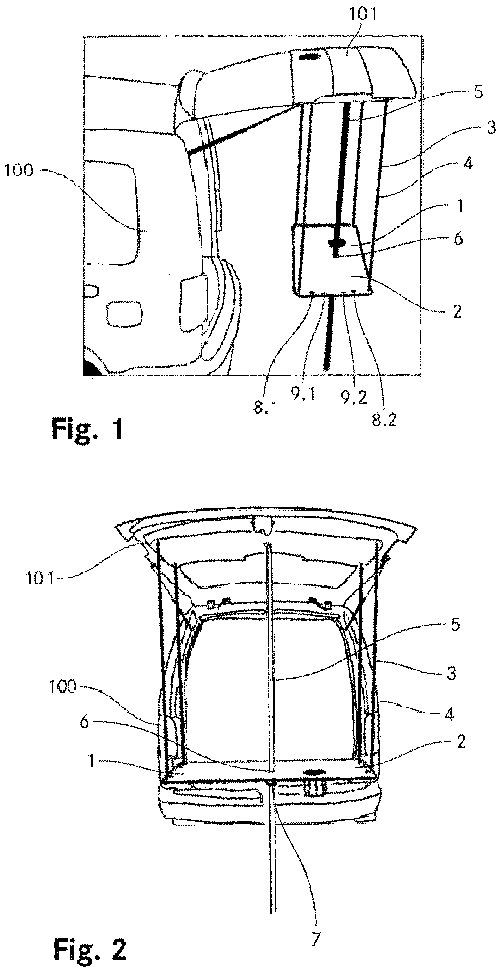

Figur 1 zeigt eine vereinfachte schematische Darstellung einer Seitenansicht eines Hecks eines Wohnmotorwagens und damit eines Kraftfahrzeugs 100 mit einer erfindungsgemässen Anordnung 1 zur Nutzung als an einer Heckklappe 101 des Kraftfahrzeugs 100 aufgehängten Hängetisch. Dabei ist die Heckklappe 101 zum Öffnen der Heckklappe 101 nach oben schwenkbar am restlichen Kraftfahrzeug 100 angebracht. Die Anordnung 1 umfasst eine Tischplatte 2 und eine an der Tischplatte 2 anbringbare oder an der Tischplatte 2 angebrachte Hängevorrichtung 3 mit wenigstens einem Hängemittel 4 zum Aufhängen der Tischplatte 2 an der geöffneten Heckklappe 101 des Kraftfahrzeugs 100.

In der Figur 1 ist das Heck des Kraftfahrzeugs 100 mit geöffneter Heckklappe 101 dargestellt, wobei die Hängevorrichtung 3 an der Tischplatte 2 angebracht ist und die Tischplatte 2 durch das wenigstens eine Hängemittel 4 an der geöffneten Heckklappe 101 des Kraftfahrzeugs 100 aufgehängt ist. Im vorliegenden Ausführungsbeispiel weist die Tischplatte 2 eine im Wesentlichen rechteckige Form auf und weist in den Bereichen ihrer Ecken je ein durchgehendes Loch auf. Das wenigstens eine Hängemittel 4 sind vorliegend zwei Schnüre. Diese beiden Schnüre sind je mit ihrem ersten Ende und mit ihrem zweiten Ende an der Heckklappe 101 angebracht. Die zwei Schnüre verlaufen je von ihrem ersten Ende betrachtet von oben nach unten durch eines dieser durchgehenden Löcher auf eine Unterseite der Tischplatte 2, entlang der Unterseite der Tischplatte 2 je zu einem weiteren der Löcher und durch das jeweilige weitere Loch wieder nach oben zur Heckklappe 101 zu ihrem zweiten Ende. Die beiden Schnüre bilden somit im Wesentlichen eine u-Form, wenn die Tischplatte 2 wie vorliegend in Figur 1 dargestellt an der geöffneten Heckklappe 101 aufgehängt ist.

In einer Variante davon ist die Hängevorrichtung 3 längenverstellbar. Hierzu weist die Hängevorrichtung 3 eine Längenverstellvorrichtung auf, um eine freie Länge des wenigstens einen Hängemittels 4 einzustellen, um eine Höhe der Tischplatte 2 über dem Boden einzustellen, in welcher die Tischplatte 2 über dem Boden hängt, wenn die Tischplatte 2 mit der Hängevorrichtung 3 an der geöffneten Heckklappe 101 des I<raftfahrzeugs 100 aufgehängt ist. Hierzu kann beispielsweise an jeder der zwei Schnüre eine Dreistegschnalle als Längenverstellvorrichtung angeordnet sein.

In einer weiteren Variante weist die Hängevorrichtung 3 eine Einzugsvorrichtung zum Einziehen des wenigstens einen Hängemittels 4 auf, um beim Verstauen der Tischplatte bei Nichtgebrauch des Hängetischs das wenigstens eine Hängemittel 4 einzuziehen und dadurch zu verstauen. Hierzu können beispielsweise in einem Gehäuse angeordnete Rollen zum Aufrollen des Hängemittels 4 als Einzugsvorrichtung eingesetzt werden.

Indem die Tischplatte 2 wie in Figur 1 dargestellt an der geöffneten Heckklappe 101 aufgehängt ist, bildet die Bodenfläche im Heck des Kraftfahrzeugs 100 zugleich eine Sitzgelegenheit, sodass ein Nutzer der Anordnung 1 sich auf die Bodenfläche im Heck des I<raftfahrzeugs 100 setzen und seine Füsse auf dem Boden zwischen Stossstange des I<raftfahrzeugs 100 und Tischplatte 2 abstellen kann und den durch die Anordnung 1 gebildeten Hängetisch nutzen kann.

Wie in der Figur 1 ersichtlich ist, umfasst die Anordnung 1 weiter eine Stützstange 5 zum Unterstützen der geöffneten Heckklappe 101 des Kraftfahrzeugs 100 durch einklemmen der Stützstange 5 zwischen Boden und geöffneter Heckklappe 101. Die Stützstange 5 ist eine Teleskopstützstange und weist eine Länge auf, welche im Bereich von 1.6 m bis 2.3 m verstellbar ist. In der vorliegenden Figur 1 dargestellt ist die Länge der zwischen Boden und geöffneter Heckklappe 101 eingeklemmten Stützstange 5 auf 1.9 m eingestellt.

Die Tischplatte 2 weist im Wesentlichen in einer Mitte der Tischplatte 2 angeordnet in ihrer Hauptfläche eine kreisförmige Stützstangendurchführöffnung 6 zum Durchführen der Stützstange 5 durch die Stützstangendurchführöffnung 6 und damit durch die Tischplatte 2 auf. In der Figur 1 ist gezeigt, wie die geöffnete Heckklappe 101 durch die Stützstange 5 unterstützt ist, indem die Stützstange vertikal ausgerichtet zwischen dem Boden und der Heckklappe 101 eingeklemmt ist, wodurch die Stützstange 5 ein unbeabsichtigtes Schliessen der Heckklappe 101 des Kraftfahrzeugs 100 verhindert. Dabei ist in der Figur 1 die Stützstange 5 zugleich durch die Stützstangendurchführöffnung 6 geführt dargestellt und die Tischplatte 2 ist an der geöffneten Heckklappe 101 des Kraftfahrzeugs 100 aufgehängt dargestellt.

Die Stützstange 5 weist einen kreisförmigen Querschnitt auf. Mit diesem Querschnitt passt die Stützstange 5 durch die Stützstangendurchführöffnung 6, wobei die Stützstangendurchführöffnung 6 eine Stützstangendurchführöffnungsfläche aufweist, welche Stützstangendurchführöffnungsfläche 104%, einer Fläche des Querschnitts der Stützstange 5 beträgt. Wenn die geöffnete Heckklappe 101 des Kraftfahrzeugs 100 durch die Stützstange 5 unterstützt ist und die Stützstange 5 zugleich wie in Figur 1 dargestellt durch die Stützstangendurchführöffnung 6 geführt ist sowie die Tischplatte 2 mit der Hängevorrichtung 3 an der geöffneten Heckklappe 101 des Kraftfahrzeugs aufgehängt ist, werden unbeabsichtigte horizontale Translationsbewegungen der Tischplatte 2 auf ein Minimum beinahe vollständig verhindert.

Figur 2 zeigt eine vereinfachte schematische Darstellung einer Ansicht des Kraftfahrzeugs 100 mit der geöffneten Heckklappe 101 und mit der erfindungsgemässen Anordnung 1 von hinten. Dadurch ist deutlicher als in Figur 1 zu erkennen, wie die Tischplatte 2 durch die Hängevorrichtung 3 an der geöffneten Heckklappe 101 aufgehängt ist. So ist zu erkennen, dass die beiden Schnüre, welche das mindestens eine Hängemittel 4 der Hängevorrichtung 3 bilden, an vier Punkten an der Heckklappe 101 des Kraftfahrzeugs 100 angebracht sind, wodurch die Tischplatte 2 bei geöffneter Heckklappe 101 durch die Hängevorrichtung 3 an den vier Punkten an der geöffneten Heckklappe 101 aufgehängt ist.

In der Figur 2 ist zudem gut zu erkennen, dass die Tischplatte 2 eine I<ocherhalterung 12 aufweist. Diese I<ocherhalterung 12 ist eine kreisförmige Aussparung in der Tischplatte 2, wobei der durch diese Aussparung erzeugte kreisförmige Ausschnitt an I<etten unten an der Tischplatte 2 angehängt ist. Dies ermöglicht es, einen hier nicht gezeigten Campingkocher in der I<ocherhalterung 12 unterzubringen, indem die Gaskartusche des Campingkochers von oben in die kreisförmige Aussparung einzuführen und auf dem an den Ketten hängenden kreisförmigen Ausschnitt abzustellen, damit der obere Bereich des Campingkochers wo eine Pfanne auf den Campingkocher gestellt werden kann, nicht weit nach oben über die Tischplatte hinausreicht.

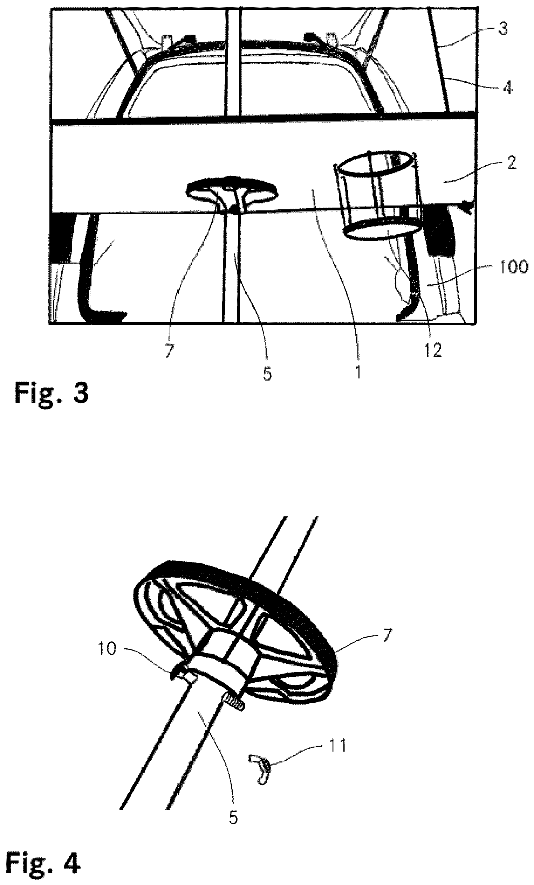

Figur 3 zeigt eine vereinfachte schematische Darstellung eines Ausschnitts einer Ansicht des Kraftfahrzeugs 100 mit der geöffneten Heckklappe 101 und mit der erfindungsgemässen Anordnung 1 von hinten. Im Gegensatz zur Figur 2, wo die Ansicht leicht von oben gezeigt ist, sodass die Oberseite der Tischplatte 2 zu sehen ist, ist in der Figur 3 eine Ansicht leicht von unten gezeigt. Dadurch ist in der Figur 3 eine Unterseite der Tischplatte 2 erkennbar.

Dadurch ist erkennbar, dass die Anordnung 1 ein an der Stützstange 2 angebrachtes Tragelement 7 aufweist, welches Tragelement 7 grösser als die Stützstangendurchführöffnung 6 ist, damit die Tischplatte 2 auf dem an der Stützstange 5 angebrachten Tragelement 7 aufliegen kann, wenn die Stützstange 5 wie vorliegend dargestellt in die Stützstangendurchführöffnung 6 eingeführt ist und zum Unterstützen der geöffneten Heckklappe 101 des Kraftfahrzeugs 100 zwischen dem Boden und der Heckklappe 101 eingeklemmt ist und die Tischplatte 2 zugleich mit der Hängevorrichtung 3 an der geöffneten Heckklappe 101 des Kraftfahrzeugs 100 aufgehängt ist.

Figur 4 zeigt eine vereinfachte schematische Darstellung eines Abschnitts der Stützstange 5 mit dem daran angebrachten Tragelement 7. In dieser Darstellung ist zu erkennen, dass das Tragelement 7 mit einer Schraube 10 und einer Mutter 11 an der Stützstange 5 anbringbar ist.

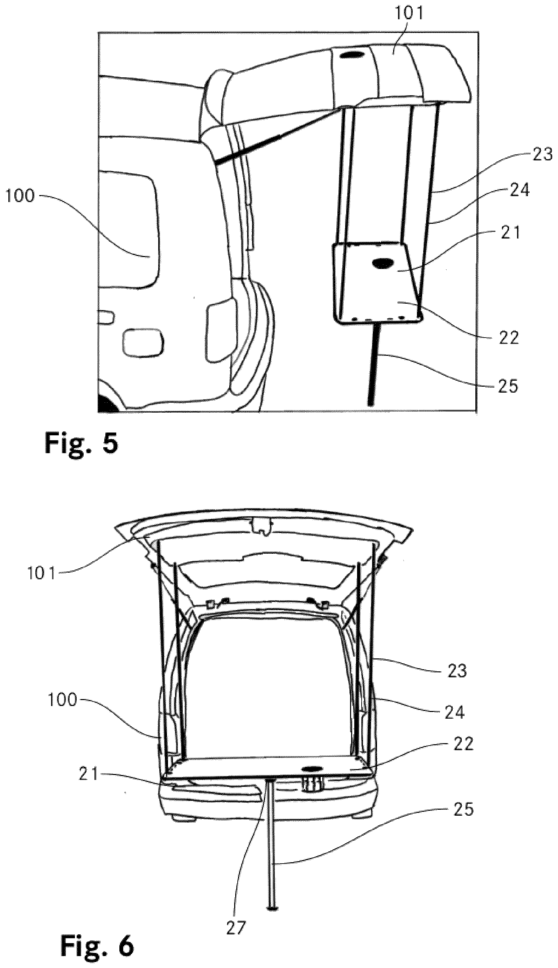

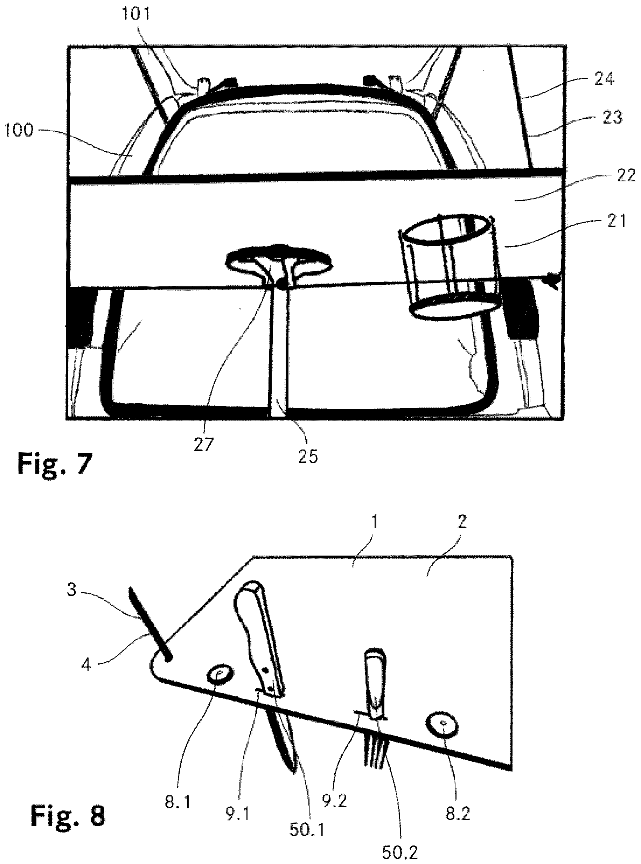

Die Figuren 5, 6 und 7 zeigen schematisch vereinfachte Darstellungen von Ansichten des Kraftfahrtzeugs 100 mit geöffneter Heckklappe 101 mit einer nicht erfindungsgemässen Anordnung 21 zur Nutzung als an der Heckklappe 101 des Kraftfahrzeugs 100 aufgehängten Hängetisch. Die in den Figuren 5, 6 und 7 gezeigten Darstellungen zeigen Ansichten aus den gleichen Perspektiven wie die Figuren 1, 2 und 3. Diese weitere Anordnung 21 umfasst ebenfalls eine Tischplatte 22 und eine an der Tischplatte 22 anbringbare oder an der Tischplatte 22 angebrachte Hängevorrichtung 23 mit wenigstens einem Hängemittel 24 zum Aufhängen der Tischplatte 22 an der geöffneten Heckklappe 101 des Kraftfahrzeugs 100. In den Figuren 5, 6 und 7 ist das Heck des Kraftfahrzeugs 100 ebenfalls mit geöffneter Heckklappe 101 dargestellt, wobei die Hängevorrichtung 23 an der Tischplatte 22 angebracht ist und die Tischplatte 22 durch das wenigstens Hängemittel 24 an der geöffneten Heckklappe 101 des Kraftfahrzeugs 100 aufgehängt ist. Im Gegensatz zur in den Figuren 1 bis 4 dargestellten Anordnung 1 umfasst die in den Figuren 5, 6 und 7 dargestellte Anordnung 21 hingegen keine Stützstange. Dafür umfasst die in den Figuren 5, 6 und 7 dargestellte Anordnung 21 ein an der Tischplatte 22 anbringbares oder an der Tischplatte 22 angebrachtes Stützbein 25 auf, welches Stützbein 25 in einem an der Tischplatte 22 angebrachten Zustand eine Stützstellung aufweist, wobei, wenn die Tischplatte 22 wie in den Figuren 5, 6 und 7 dargestellt mit der Hängevorrichtung 23 an der geöffneten Heckklappe 101 des Kraftfahrzeugs 100 aufgehängt ist und sich das Stützbein 25 in der Stützstellung befindet, das Stützbein 25 auf dem Boden abstützt. Wie in Figur 7 zu erkennen ist, ist am oberen Ende ein Element 27 angeordnet, welches im Wesentlichen dem Tragelement 7 der in den Figuren 1 bis 4 gezeigten Anordnung 1 entspricht. Vorliegend in der in den Figuren 5, 6 und 7 gezeigten Darstellung ist das Element 27 jedoch durch einen Ansteckmechanismus an der Tischplatte 22 ansteckbar und wieder von der Tischplatte 22 lösbar. Dadurch kann das Stützbein 25 auf einfache Art und Weise in der Stützstellung an der Tischplatte 22 angebracht und wieder von der Tischplatte 22 entfernt werden.

Die Figur 8 zeigt eine vereinfachte schematische Ansicht eines Abschnitts der Tischplatte 2 der in den Figuren 1 bis 4 gezeigten Anordnung 1. Dieser Abschnitt ist bei der in den Figuren 5, 6 und 7 gezeigten weiteren Anordnung 21 identisch ausgebildet.

Die Tischplatte 2 weist in ihrem Randbereich vier Magnete 8.1, 8.2 auf, von welchen in der Figur 8 zwei Magnete zu sehen sind. Diese vier Magnete 8.1, 8.2 dienen dazu, die Tischplatte 2 an einem magnetischen Bereich der Heckklappe 101 des Kraftfahrzeugs 100 zu halten, wenn die Tischplatte 2 mit vier Magneten 8.1 8.2 in die Nähe eines magnetischen Bereichs der Heckklappe 101 gebracht wird. So kann die Tischplatte beispielsweise, wenn sie wie in den Figuren 1 bis 3 dargestellt durch die Hängevorrichtung 3 an der geöffneten Heckklappe 101 des Kraftfahrzeugs 100 aufgehängt ist, im Wesentlichen horizontal ausgerichtet nach oben zur Heckklappe 101 angehoben werden, sodass sie aufgrund der magnetischen Anziehungskraft der Magnete 8.1, 8.2 an der geöffneten Heckklappe 101 gehalten ist, während die zwei Schnüre, welche das wenigstens eine Haltemittel 4 der Hängevorrichtung 3 bilden und mit ihren Enden an der Heckklappe 101 befestigt sind, lose herunterhängen.

Weiter ist in der Figur 8 zu erkennen, dass die Tischplatte 2 in ihrem Randbereich zwei Schlitze 9.1, 9.2 zum Halten von Besteckelementen 50.1, 50.2 aufweist. Diese Schlitze 9.1, 9.2 sind je von einer ersten Hauptfläche der Tischplatte 2 zu einer der ersten Hauptfläche der Tischplatte 2 gegenüberliegenden, zweiten Hauptfläche der Tischplatte 2 durchgehend durch die Tischplatte 2 und weisen je eine Länge von 3.5 cm und eine Breite von 3 mm bis 4 mm auf.

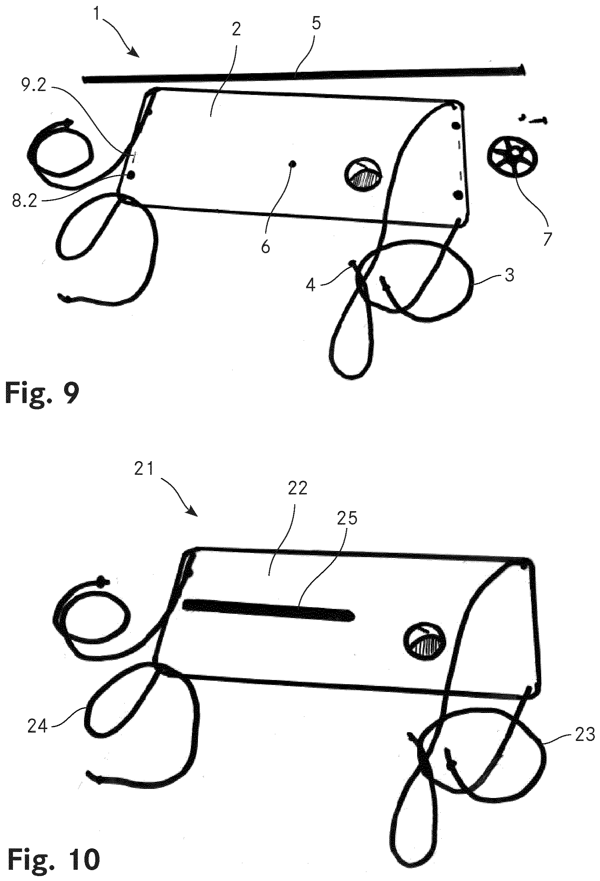

Figur 9 zeigt eine vereinfachte schematische Darstellung der in den Figuren 1 bis 4 dargestellten Anordnung 1, wobei vorliegend die Anordnung 1 nicht an der Heckklappe 101 des Kraftfahrzeugs 100 angebracht dargestellt, sondern separat vom Kraftfahrzeug 100 dargestellt ist. Dadurch ist verdeutlicht, dass die Anordnung 1 auch separat vom I<raftfahrzeug 100 hergestellt und vertrieben werden kann. So kann die Anordnung 1 beispielsweise zum Nachrüsten eines Kraftfahrzeugs vertrieben werden.

Figur 10 zeigt eine vereinfachte schematische Darstellung der in den Figuren 5, 6 und 7 dargestellten Anordnung 21, wobei vorliegend die Anordnung 21 nicht an der Heckklappe 101 des Kraftfahrzeugs 100 angebracht dargestellt, sondern separat vom Kraftfahrzeug 100 dargestellt ist. Dadurch ist verdeutlicht, dass die Anordnung 21 auch separat vom Kraftfahrzeug 100 hergestellt und vertrieben werden kann. So kann die Anordnung 21 beispielsweise zum Nachrüsten eines Kraftfahrzeugs vertrieben werden.

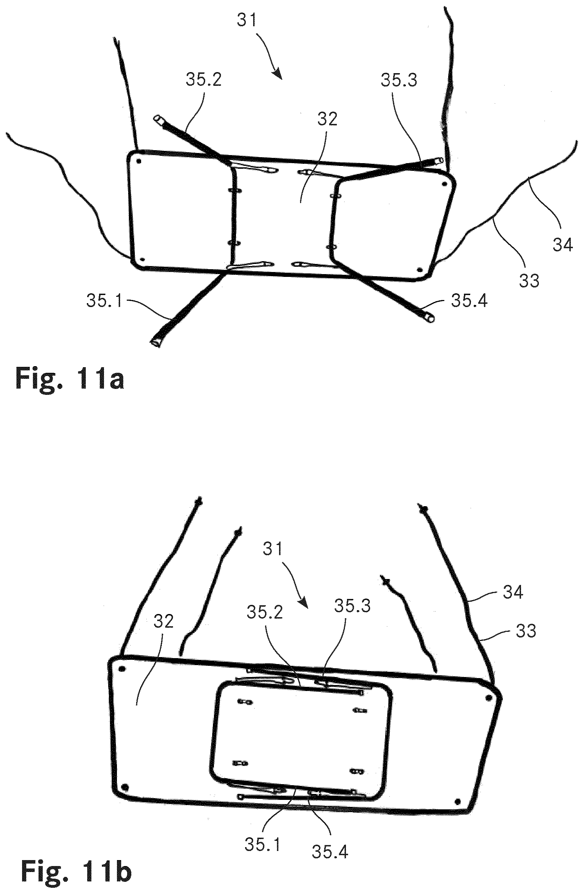

Die Figuren 11a, 11b zeigen schematisch vereinfachte Darstellungen nicht erfindungsgemässen Anordnung 31 zur Nutzung als an der Heckklappe 101 des Kraftfahrzeugs 100 aufgehängten Hängetisch. In den Figuren **11a** und **11b** ist die Anordnung 31 jedoch nicht an der Heckklappe 101 des Kraftfahrzeugs 100 angebracht dargestellt, sondern ohne das Kraftfahrzeug 100 dargestellt. Diese weitere Anordnung 31 umfasst ebenfalls eine Tischplatte 32 und eine an der Tischplatte 32 anbringbare oder an der Tischplatte 32 angebrachte Hängevorrichtung 33 mit wenigstens einem Hängemittel 34 zum Aufhängen der Tischplatte 32 an der geöffneten Heckklappe 101 des Kraftfahrzeugs 100. Die Anordnung 31 umfasst keine Stützstange. Die Anordnung 31 weist jedoch vier an der Tischplatte 32 angeordnete Klappbeine 35.1, 35.2, 35.3, 35.4 auf, welche Klappbeine 35.1, 35.2, 35.3, 35.4 von einer im Wesentlichen an die Tischplatte 32 anliegenden Einklappstellung in eine im Wesentlichen von der Tischplatte 32 abstehenden Ausklappstellung und zurück verstellbar sind. Dabei ist, wenn die Tischplatte 32 durch die Hängevorrichtung 33 an der geöffneten Heckklappe 101 aufgehängt ist, zugleich mit den in die Ausklappstellung verstellten vier Klappbeine 35.1, 35.2, 35.3, 35.4 auf dem Boden abstützbar.

Die Erfindung ist nicht auf die vorgehend im Zusammenhang mit den Figuren erläuterten Ausführungsformen beschränkt. Varianten und Variationen zur Ausführung der Erfindung sind dem Fachmann unmittelbar zugänglich. So kann die Anordnung beispielsweise sowohl Klappbeine als auch die Stützstange aufweisen. Genauso kann die Anordnung beispielsweise auch zwei Stützstangen aufweisen.

Zusammenfassend ist festzustellen, dass eine dem eingangs genannten technischen Gebiet zugehörende Anordnung, insbesondere zur Nutzung als Hängetisch, geschaffen wird, welche flexibel an verschiedenen Orten eingesetzt werden kann und nur wenig Platz beansprucht.

## Patentansprüche

1. Anordnung (1, 21, 31), insbesondere zur Nutzung als Hängetisch, insbesondere zur Nutzung als an einer Heckklappe (101) eines Kraftfahrzeugs (100), wie beispielsweise eines Wohnmotorwagens, aufgehängten Hängetischs, umfassend eine Tischplatte (2, 22, 32) und eine an der Tischplatte (2, 22, 32) anbringbare oder an der Tischplatte (2, 22, 32) angebrachte Hängevorrichtung (3, 23, 33) mit wenigstens einem Hängemittel (4, 24, 34) zum Aufhängen der Tischplatte (2, 22, 32) an der geöffneten Heckklappe (101) des Kraftfahrzeugs (100), insbesondere des Wohnmotorwagens, wobei die Anordnung (1) eine Stützstange (5) zum Unterstützen der geöffneten Heckklappe (101) des Kraftfahrzeugs (100) umfasst und dass die Tischplatte (2) in ihrer Hauptfläche eine Stützstangendurchführöffnung (6) zum Durchführen der Stützstange (5) durch die Stützstangendurchführöffnung (6) und damit durch die Tischplatte (2) aufweist, **dadurch gekennzeichnet, dass** das wenigstens eine Hängemittel (4, 24, 34) durch eine Schnur, ein Seil, ein Band, ein Draht oder eine I<ette gebildet ist.

2. Anordnung (1) nach Anspruch 1, **dadurch gekennzeichnet, dass** die Stützstange (5) einen Querschnitt aufweist, mit welchem Querschnitt die Stützstange (5) durch die Stützstangendurchführöffnung (6) passt, wobei die Stützstangendurchführöffnung (6) eine Stützstangendurchführöffnungsfläche aufweist, welche Stützstangendurchführöffnungsfläche höchstens 110%, bevorzugt höchstens 107%, ganz besonders bevorzugt höchstens 105%, einer Fläche des Querschnitts der Stützstange (5) beträgt.

3. Anordnung (1) nach Anspruch 1 oder 2, **dadurch gekennzeichnet, dass** die Stützstange (5) eine Teleskopstange ist.

4. Anordnung (1) nach einem der Ansprüche 1 bis 3, **dadurch gekennzeichnet, dass** die Anordnung (1) ein an der Stützstange (5) anbringbares oder an der Stützstange (5) angebrachtes Tragelement (7) aufweist, welches Tragelement (7) in einem an der Stützstange (5) angebrachten Zustand grösser als die Stützstangendurchführöffnung (6) ist, damit die Tischplatte (2) auf dem an der Stützstange (5) angebrachten Tragelement (7) aufliegen kann, wenn die Stützstange (5) in die Stützstangendurchführöffnung (6) eingeführt ist und zum Unterstützen der geöffneten Heckklappe (101) des Kraftfahrzeugs (100) zwischen dem Boden und der Heckklappe (101) eingeklemmt ist.

5. Anordnung (21) nach einem der Ansprüche 1 bis 4, **dadurch gekennzeichnet, dass** die Anordnung (21) wenigstens ein an der Tischplatte (22) angeordnetes Klappbein (35.1, 35.2, 35.3, 35.4) aufweist, welches wenigstens eine Klappbein (35.1, 35.2, 35.3, 35.4) von einer im Wesentlichen an die Tischplatte (32) anliegenden Einklappstellung in eine im Wesentlichen von der Tischplatte (32) abstehenden Ausklappstellung und zurück verstellbar ist.

6. Anordnung (1, 21, 31) nach einem der Ansprüche 1 bis 5, **dadurch gekennzeichnet, dass** die Hängevorrichtung (3, 23, 33) eine Einzugsvorrichtung zum Einziehen des wenigstens einen Hängemittels (4, 24, 34) aufweist, um beim Verstauen des Hängetischs bei Nichtgebrauch des Hängetischs das wenigstens eine Hängemittel (4, 24, 34) einzuziehen und dadurch zu verstauen.

7. Anordnung (1, 21, 31) nach einem der Ansprüche 1 bis 6, **dadurch gekennzeichnet, dass** die Tischplatte (2, 22, 32) wenigstens einen Magnet (8.1, 8.2), bevorzugt wenigstens zwei Magnete (8.1, 8.2), besonders bevorzugt wenigstens drei Magnete (8.1, 8.2), aufweist, um die Tischplatte (2, 22, 32) an einem magnetischen Bereich der Heckklappe (101) des Kraftfahrzeugs (100) zu halten, wenn die Tischplatte (2, 22, 32) mit dem wenigstens einen Magneten (8.1, 8.2) in die Nähe eines magnetischen Bereichs der Heckklappe (101) gebracht wird.

8. Anordnung (1, 21, 31) nach einem, der Ansprüche 1 bis 7, **dadurch gekennzeichnet, dass** in der Tischplatte (2, 22, 32) wenigstens ein Schlitz (9.1, 9.2) zum Halten eines Besteckelements (50.1, 50.2) angeordnet ist.

9. Kraftfahrzeug (100), insbesondere Wohnmotorwagen, mit einer Anordnung (1, 21, 31) nach einem der Ansprüche 1 bis 8.

10. Kraftfahrzeug (100) nach Anspruch 9, **dadurch gekennzeichnet, dass** das Kraftfahrzeug (100) eine Heckklappe (101) aufweist, welche Heckklappe (101) zum Öffnen der Heckklappe (101) nach oben schwenkbar am restlichen Kraftfahrzeug (100) angebracht ist, wobei die Tischplatte (2, 22, 32) mit der Hängevorrichtung (3, 23, 33) an der Heckklappe (101) anbringbar ist, damit die Tischplatte (2, 22, 32) bei geöffneter Heckklappe (101) durch die Hängevorrichtung (3, 23, 33) an der Heckklappe (101) aufhängbar oder aufgehängt ist.

11. Kraftfahrzeug (100) nach Anspruch 10, **dadurch gekennzeichnet, dass** die Stützstange (5) eine Länge aufweist oder, wenn die Stützstange (2) eine Teleskopstange ist, in eine Länge bringbar ist, mit welcher Länge die Stützstange (2) bei geöffneter Heckklappe (101) im Wesentlichen vertikal ausgerichtet zwischen dem Boden und die geöffnete Heckklappe (101) einklemmbar ist, um die geöffnete Heckklappe (101) zu unterstützen.

12. Kraftfahrzeug (100) nach Anspruch 11, **dadurch gekennzeichnet, dass** die Anordnung (1) eine Anordnung (1) nach Anspruch 4 ist und dass die Stützstange (5) im Wesentlichen vertikal ausgerichtet und durch die Stützstangendurchführöffnung (6) in der Tischplatte (2) geführt zwischen dem Boden und die geöffnete Heckklappe (101) einklemmbar ist, während die Tischplatte (2) durch die Hängevorrichtung (3) an der Heckklappe (101) aufgehängt ist und zugleich auf dem an der Stützstange (5) angebrachten Tragelement (7) aufliegt.

13. Kraftfahrzeug (100) nach einem der Ansprüche 10 bis 12, **dadurch gekennzeichnet, dass** die Anordnung (31) eine Anordnung (31) nach Anspruch 5 ist und dass die Tischplatte (32) durch die Hängevorrichtung (33) an der geöffneten Heckklappe (101) aufhängbar und zugleich mit dem in die Ausklappstellung verstellten wenigstens einen Klappbein (35.1, 35.2, 35.3, 35.4) auf dem Boden abstützbar ist.

14. Kraftfahrzeug (100) nach einem der Ansprüche 10 bis 13, **dadurch gekennzeichnet, dass** das wenigstens eine Hängemittel (4, 24, 34) an mindestens zwei Punkten, bevorzugt mindestens drei Punkten, besonders bevorzugt mindestens vier Punkten, an der Heckklappe (101) angebracht ist, wodurch die Tischplatte (2, 22, 32) bei geöffneter Heckklappe (101) durch die Hängevorrichtung (3, 23, 33) an den mindestens zwei bzw. mindestens drei bzw. mindestens vier Punkten an der geöffneten Heckklappe (101) aufhängbar oder aufgehängt ist.

## Claims

1. Arrangement (1, 21, 31), in particular for use as a hanging desk, in particular for use as a hanging desk suspended from a tailgate (101) of a motor vehicle (100), such as a motor home, comprising a table top (2, 22, 32) and a hanging device (3, 23, 33) which can be attached to the table top (2, 22, 32) or is attached to the table top (2, 22, 32) and has at least one hanging means (4, 24, 34) for hanging the table top (2, 22, 32) on the open tailgate (101) of the motor vehicle (100), in particular of the motor home, wherein the arrangement (1) comprises a support rod (5) for supporting the opened tailgate (101) of the motor vehicle (100) and the table top (2) has in its main surface a support rod passage opening (6) for passing the support rod (5) through the support rod passage opening (6) and thus through the table top (2) , **characterized in that** the at least one hanging means (4, 24, 34) is formed by a cord, a rope, a strap, a wire or a chain.

2. Arrangement (1) according to claim 1, **characterized in that** the support rod (5) has a cross-section with which the support rod (5) fits through the support rod passage opening (6), wherein the support rod passage opening (6) has a support rod passage opening aperture which support rod passage opening aperture is at most 110%, preferably at most 107%, most preferably at most 105%, of an area of the cross-section of the support rod (5).

3. Arrangement (1) according to claim 1 or 2, **characterized in that** the support rod (5) is a telescopic rod.

4. Arrangement (1) according to one of claims 1 to 3, **characterized in that in that** the arrangement (1) has a support element (7) which can be attached to the support rod (5) or is attached to the support rod (5), which support element (7) is larger than the support rod passage opening (6) when attached to the support rod (5), so that the table top (2) can rest on the support element (7) attached to the support rod (5) when the support rod (5) is inserted into the support rod passage opening (6) and is clamped between the floor and the tailgate (101) of the motor vehicle (100) to support the open tailgate (101).

5. Arrangement (21) according to one of claims 1 to 4, **characterized in that** the arrangement (21) has at least one folding leg (35.1, 35.2, 35.3, 35.4) arranged on the table top (22), which folding leg (35.1, 35.2, 35.3, 35.4) is adjustable from a folded position, in which it essentially rests against the table top (32), into an unfolded position, in which it essentially protrudes from the table top (32), and back again.

6. Arrangement (1, 21, 31) according to one of claims 1 to 5, **characterized in that in that** the hanging device (3, 23, 33) has a retraction device for retracting the at least one hanging means (4, 24, 34) in order to retract and thereby stow the at least one hanging means (4, 24, 34) when the hanging desk is stowed away when not in use.

7. Arrangement (1, 21, 31) according to one of claims 1 to 6, **characterized in that** the table top (2, 22, 32) has at least one magnet (8.1, 8.2), preferably at least two magnets (8.1, 8.2), particularly preferably at least three magnets (8.1, 8.2), for holding the table top (2, 22, 32) on a magnetic area of the tailgate (101) of the motor vehicle (100) when the table top (2, 22, 32) with the at least one magnet (8.1, 8.2) is brought into the vicinity of a magnetic area of the tailgate (101).

8. Arrangement (1, 21, 31) according to one of claims 1 to 7, **characterized in that** at least one slot (9.1, 9.2) is arranged in the table top (2, 22, 32) for holding a cutlery element (50.1, 50.2).

9. Motor vehicle (100), in particular motor home, with an arrangement (1, 21, 31) according to one of claims 1 to 8.

10. Motor vehicle (100) according to claim 9, **characterized in that** the motor vehicle (100) has a tailgate (101), which tailgate (101) is mounted on the rest of the motor vehicle (100) so as to be pivotable upwardly for opening the tailgate (101), wherein the table top (2, 22, 32) can be attached to the tailgate (101) by means of the hanging device (3, 23, 33) so that the table top (2, 22, 32) can be hung or is hung on the tailgate (101) by the hanging device (3, 23, 33) when the tailgate (101) is open.

11. Motor vehicle (100) according to claim 10, **characterized in that** the support rod (5) has a length or, if the support rod (2) is a telescopic rod, can be brought to a length, with which length the support rod (2) can be clamped between the floor and the open tailgate (101) in a substantially vertical alignment when the tailgate (101) is open, in order to support the open tailgate (101).

12. Motor vehicle (100) according to claim 11, **characterized in that** the arrangement (1) is an arrangement (1) according to claim 4 and **in that** the support rod (5) can be aligned essentially vertically and, guided through the support rod passage opening (6) in the table top (2), be clamped between the floor and the open tailgate (101), while the table top (2) is hung on the tailgate (101) by the hanging device (3) and is at the same time resting on the support element (7) attached to the support rod (5).

13. Motor vehicle (100) according to one of claims 10 to 12, **characterized in that** the arrangement (31) is an arrangement (31) according to claim 5 and **in that** the table top (32) can be suspended from the open tailgate (101) by the hanging device (33) and at the same time be supported on the ground with the at least one folding leg (35.1, 35.2, 35.3, 35.4) adjusted into the fold-out position.

14. Motor vehicle (100) according to one of claims 10 to 13, **characterized in that** the at least one hanging means (4, 24, 34) is attached to the tailgate (101) at at least two points, preferably at least three points, particularly preferably at least four points, whereby the table top (2, 22, 32) can be hung or is hung by the hanging device (3, 23, 33) at the at least two or at least three or at least four points on the open tailgate (101) when the tailgate (101) is open.

## Revendications

1. Dispositif (1, 21, 31), destiné notamment à l'utilisation en tant que table suspendue, destiné notamment à l'utilisation en tant que table suspendue accrochée à un hayon (101) d'un véhicule automobile (100), tel que par exemple un camping-car, comprenant un plateau de table (2, 22, 32) et un dispositif d'accrochage (3, 23, 33) susceptible d'être monté sur le plateau de table (2, 22, 32) ou monté sur le plateau de table (2, 22, 32), pourvu d'au moins un moyen d'accrochage (4, 24, 34), destiné à accrocher le plateau de table (2, 22, 32) sur le hayon (101) ouvert du véhicule automobile (100), notamment du camping-car, le dispositif (1) comprenant une barre de soutien (5), destinée à soutenir le hayon (101) ouvert du véhicule automobile (100) et le plateau de table (2) comportant dans sa surface principale une ouverture de passage (6) de la barre de soutien, destinée à faire passer la barre de soutien (5) à travers l'ouverture de passage (6) de la barre de soutien et ainsi à travers le plateau de table (2), **caractérisé en ce que** l'au moins un moyen d'accrochage (4, 24, 34) est constitué d'une ficelle, d'un câble, d'une bande, d'un fil métallique ou d'une chaîne.

2. Dispositif (1) selon la revendication **1, caractérisé en ce que** la barre de soutien (5) présente une section transversale par laquelle section transversale la barre de soutien (5) s'adapte à travers l'ouverture de passage (6) de la barre de soutien, l'ouverture de passage (6) de la barre de soutien comportant une surface d'ouverture de passage de la barre de soutien, laquelle surface d'ouverture de passage de la barre de soutien s'élève au plus à 110 %, de manière préférentielle au plus à 107 %, de manière tout particulièrement préférentielle au plus à 105 % d'une surface de la section transversales de la barre de soutien (5).

3. Dispositif (1) selon la revendication 1 ou 2, **caractérisé en ce que** la barre de soutien (5) est une barre télescopique.

4. Dispositif (1) selon l'une quelconque des revendications 1 à 3, **caractérisé en ce que** le dispositif (1) comporte un élément de support (7) susceptible d'être monté sur la barre de soutien (5) ou monté sur la barre de soutien (5), lequel élément de support (7) lorsqu'il est monté sur la barre de soutien (5), est plus grand que l'ouverture de passage (6) de la barre de soutien, pour que le plateau de table (2) puisse reposer sur l'élément de support (7) monté sur la barre de soutien (5), lorsque la barre de soutien (5) est introduite dans l'ouverture de passage (6) de la barre de soutien et pour soutenir le hayon (101) ouvert du véhicule automobile (100), est enserré entre le fond inférieur et le hayon (101).

5. Dispositif (21) selon l'une quelconque des revendications 1 à 4, **caractérisé en ce que** le dispositif (21) comporte au moins un pied rabattable (35.1, 35.2, 35.3, 35.4) placé sur le plateau de table (22), lequel au moins un pied rabattable (35.1, 35.2, 35.3, 35.4) est ajustable d'une position escamotée sensiblement adjacente au plateau de table (32) dans une position déployée débordant sensiblement du plateau de table (32) et en retour.

6. Dispositif (1, 21, 31) selon l'une quelconque des revendications 1 à 5, **caractérisé en ce que** le dispositif d'accrochage (3, 23, 33) comporte un dispositif de rétractation pour faire se rétracter l'au moins un moyen d'accrochage (4, 24, 34), pour faire se rétracter et pour ranger l'au moins un moyen d'accrochage (4, 24, 34), lors du rangement de la table suspendue en cas de non-utilisation de la table suspendue.

7. Dispositif (1, 21, 31) selon l'une quelconque des revendications 1 à 6, **caractérisé en ce que** le plateau de table (2, 22, 32) comporte au moins un aimant (8.1, 8.2), de manière préférentielle au moins deux aimants (8.1, 8.2), de manière particulièrement préférentielle au moins trois aimants (8.1, 8.2), pour maintenir le plateau de table (2, 22, 32) sur une zone magnétique du hayon (101) du véhicule automobile (100), lorsque le plateau de table (2, 22, 32) est amené à l'aide de l'au moins un aimant (8.1, 8.2) à proximité de la zone magnétique du hayon (101).

8. Dispositif (1, 21, 31) selon l'une quelconque des revendications 1 à 7, **caractérisé en ce que** dans le plateau de table (2, 22, 32) est placée au moins une fente (9.1, 9.2), destinée à maintenir un élément de couvert (50.1, 50.2).

9. Véhicule automobile (100), notamment camping-car, pourvu d'un dispositif (1, 21, 31) selon l'une quelconque des revendications 1 à 8.

10. Véhicule automobile (100) selon la revendication 9, **caractérisé en ce que** le véhicule automobile (100) comporte un hayon (101), lequel hayon (101), pour ouvrir le hayon (101) est monté en étant susceptible de pivoter vers le haut sur le véhicule automobile (100) restant, le plateau de table (2, 22, 32) étant susceptible d'être monté sur le hayon (101) à l'aide du dispositif d'accrochage (3, 23, 33), pour que, lorsque le hayon (101) est ouvert, le plateau de table (2, 22, 32) soit susceptible d'être accroché ou soit accroché sur le hayon (101) à l'aide du dispositif d'accrochage (3, 23, 33).

11. Véhicule automobile (100) selon la revendication 10, **caractérisé en ce que** la barre de soutien (5) présente une longueur ou lorsque la barre de soutien (2) est une barre télescopique, peut être amenée à une longueur, à l'aide de laquelle longueur, lorsque le hayon (101) est ouvert, la barre de soutien (2) est susceptible d'être enserrée, en étant orientée sensiblement à la verticale, entre le fond inférieur et le hayon (101) ouvert, pour soutenir le hayon (101) ouvert.

12. Véhicule automobile (100) selon la revendication 11, **caractérisé en ce que** le dispositif (1) est un dispositif (1) selon la revendication 4 et **en ce que** la barre de soutien (5) est orientée sensiblement à la verticale et est susceptible d'être enserrée, à travers l'ouverture de passage (6) de la barre de soutien dans le plateau de table (2) en étant guidée entre le fond inférieur et le hayon (101) ouvert, alors que le plateau de table (2) est accroché par le dispositif d'accrochage (3) sur le hayon (101) et repose simultanément sur l'élément de support (7) monté sur la barre de soutien (5).

13. Véhicule automobile (100) selon l'une quelconque des revendications 10 à 12, **caractérisé en ce que** le dispositif (31) est un dispositif (31) selon la revendication 5 et **en ce que** le plateau de table (32) est susceptible d'être accroché sur le hayon (101) ouvert par le dispositif d'accrochage (33) et simultanément, est susceptible d'être soutenu sur le fond inférieur par l'au moins un pied rabattable (35.1, 35.2, 35.3, 35.4) ajusté dans la position déployée.

14. Véhicule automobile (100) selon l'une quelconque des revendications 10 à 13, **caractérisé en ce que** l'au moins un moyen d'accrochage (4, 24, 34) est monté par au moins deux points, de manière préférentielle par au moins trois points, de manière particulièrement préférentielle par au moins quatre points sur le hayon (101), suite à quoi, lorsque le hayon (101) est ouvert, le plateau de table (2, 22, 32) est susceptible d'être accroché ou est accroché par le dispositif d'accrochage (3, 23, 33) sur les au moins deux ou les au moins trois ou les au moins quatre points sur le hayon (101) ouvert.
